# EUROPÄISCHE PATENTSCHRIFT

(11) **EP 2 004 463 B1**
(45) Veröffentlichungstag und Bekanntmachung des Hinweises auf die Patenterteilung: **28.03.2012**
(21) Anmeldenummer: 07722117.4
(22) Anmeldetag: 28.03.2007
(51) Int. Cl.: B62K 5/04, B60T 11/04, B62L 3/08

(54) **FAHRZEUG, INSBESONDERE SPORT- UND FUNSPORTGERÄT**
VEHICLE, IN PARTICULAR SPORT AND FUN SPORT DEVICE
VEHICULE ET EN PARTICULIER APPAREIL DE SPORT OU APPAREIL DE SPORT ET DE DETENTE

(30) Priorität: 31.03.2006 DE 102006015592
(43) Veröffentlichungstag der Anmeldung: 24.12.2008
(73) Patentinhaber: Jessberger, Josef, 83098 Brannenburg (DE)
(72) Erfinder: Jessberger, Josef, 83098 Brannenburg (DE)
(74) Vertreter: Schnekenbühl, Robert Matthias L.
(86) Internationale Anmeldenummer: PCT/DE2007/000559
(87) Internationale Veröffentlichungsnummer: WO 2007/112723

(56) Entgegenhaltungen:
- DE-U1- 20 003 739
- DE-U1- 20 009 705
- DE-U1- 20 309 134
- GB-A- 2 175 657
- NL-C1- 1 008 172
- US-A1- 2004 079 186
- US-A1- 2005 194 757
- US-B1- 6 378 663

## Beschreibung

Die Erfindung bezieht sich auf ein Fahrzeug, insbesondere Sport- und Funsportgerät gemäß Oberbegriff des Anspruchs 1, wie es zum motorlosen Befahren von Gefällstrecken Verwendung findet.

Es sind Fahrzeuge bekannt, die durch die eigene Schwerkraft angetrieben Gefällstrecken (Bergabfahrt) befahren können und hierbei sowohl gelenkt als auch gebremst werden können. Zu dieser Gruppe Fahrzeugen gehören unter anderem so genannte "Sommerrodel". Hierbei handelt es sich um zweiachsige und mindestens dreirädrige Fahrzeuge, mit deren Hilfe man entweder über bereits bestehende Strecken, wie beispielsweise Straßen, Wege, Waldwege, Bobbahnen oder über im wesentlichen nicht durch Menschenhand umgestaltete Abhänge, wie beispielsweise Skipisten, talwärts fährt.

Die AT 000 137 U1 offenbart ein Fahrzeug, das mit den Füßen über das Vorderrad gelenkt wird, während die Hinterräder gemeinsam und symmetrisch über einen Griffbügel mit den Händen gebremst werden. Nachteilig ist hierbei, dass der Fahrer die Füße nicht fest an den Fußstützen aufstellen kann, sondern mit den Füßen die Lenkbewegungen dosieren muss. Schon geringe unbeabsichtigte Fußbewegungen verändern hierbei die Fahrtrichtung. Die Hände umgreifen die beiden beweglichen Bremsbügel. Der Fahrer hat somit wenig festen Sitz auf dem Fahrzeug. Die Fahrsicherheit bei höheren Geschwindigkeiten und /oder unebenen Fahrbahnen ist hierdurch negativ beeinträchtigt, da dynamische Kräfte auf Fahrzeug und Fahrer durch den Fahrer ausbalanciert werden müssen. Zudem werden die Bremsen symmetrisch angesteuert, sodass bei gebremster Kurvenfahrt erhöhte Querkräfte auf das Lenkrad wirken. Auch kann bei Defekt an der Bremse die gesamte Bremsanlage versagen.

Die AT 383 501 B offenbart ein dreirädriges Fahrzeug, das ausschließlich über die Hinterradbremsen gebremst und ebenfalls durch diese Bremsen gesteuert wird. Nachteilig ist hierbei, dass bei jedem Lenkvorgang das Fahrzeug konstruktionsbedingt auch abgebremst wird.

Die DE 1 821 162 zeigt ein Fahrzeug, das durch Verschieben des Fahrersitzes abgebremst wird. Nachteilig hierbei ist, dass dies nur gleichzeitig und gleichmäßig an den Hinterrädern erfolgt. Weiterhin kann sich der Fahrer nicht entspannt in den Sitz setzen, da er mit seinem Körper eine dosierte Bewegung zum Bremsen ausführen muss.

Ein in der AT 005 183 U1 beschriebenes Fahrzeug weist eine geschwindigkeitsabhängige Fliehkraftbremse auf, wobei die Bremskraft ausschließlich von der Voreinstellung der Bremse und der aktuellen Geschwindigkeit abhängt. Eine der situativ benötigten Bremskraft angepasste Dosierung ist hierbei nicht möglich.

Des Weiteren ist aus dem Stand der Technik die Gebrauchsmusterschrift DE 200 097 05 U1 bekannt, welche ein Fahrzeug, insbesondere ein Muskelkraftbetriebenes Fahrzeug beschreibt, mit einer Drehschemellenkung, dadurch gekennzeichnet, dass die Gelenkräder der Drehschemellenkung einen Nachlauf gegenüber der Drehachse des Drehschemels aufweisen.

Des Weiteren ist aus dem Stand der Technik die GB 2175657A bekannt, welche ein Bremssystem für Fahrräder beschreibt. Dabei wird ein Bremssystem beschrieben, bei welchem die Baudenzüge unterbrochen werden.

Des Weiteren geht aus dem Stand der Technik hervor, d.h. aus der US 6220612 B1 ein gattungsgemäßes Vehikel hervor, welches ein Steuerrad und zwei Hinterräder aufweist, welche an beweglichen Armen befestigt sind. Die beiden Arme sind dabei über einen "YOKE" Mechanismus verbunden.

Des Weiteren offenbart der Stand der Technik in der US 550 1478 ein dreirädriges Vehikel, mit einem Rahmen, einem Sitz, einem vorderen Antriebsrad, zwei lenkbaren hinteren Rädern, welche über einen Steuermechanismus mit einem Lenker angesteuert werden.

Schließlich ist in der DE 103 43 702 A1 ein Fahrzeug beschrieben, welches ein unmotorisiertes Dreirad darstellt, mit an den Hinterrädern vorgesehenen Bremsen, die über einen am Lenker angeordneten Bremsgriff gleichzeitig betätigbar sind. Dies bringt aber eher die Gefahr, dass bei Bremsungen in den Kurven Kräfte auftreten, welche zu Stürzen führen würden, wenn das Fahrzeug nicht so schwer wäre.

Aufgabe der Erfindung ist es somit, ein Fahrzeug o. g. Gattung anzugeben, das leicht ist, eine hohe Sicherheit bietet, insbesondere reaktionsschnell den Betätigungen des Fahrers folgt und hierbei dennoch für den Fahrer sicher beherrschbar bleibt, obwohl es relativ wenig Eigengewicht besitzt.

Diese Aufgabe wird durch ein Funsportgerät umfassend ein Fahrgestell (1), eine drehbare Lenkergabel (10), mit einem linken Lenkergriff (19a) und einem rechten Lenkergriff (19b) gelöst, wobei an dem linken Lenkergriff (19a) ein linker Bremsgriff (20a) angeordnet ist und an dem rechten Lenkergriff (19b) ein rechter Bremsgriff (20b) angeordnet ist, wobei die drehbare Lenkergabel (10) des Weiteren ein Drehgelenk (6) und eine Radachse (17) mit einem Vorderrad (16) umfasst, eine an der Rückseite des Fahrgestells (1) vorgesehene Hinterachse (23) mit einem linken Hinterrad (24a) und einem rechten Hinterrad (24b), wobei dem linken Hinterrad (24a) eine linke Bremse (25a) zugeordnet ist und dem rechten Hinterrad (24b) eine rechte Bremse (25b) zugeordnet ist, und die linke Bremse (25a) über den linken Bremsgriff (20a) betätigbar ist und die rechte Bremse (25b) über den rechten Bremsgriff (20b) betätigbar ist, wobei der linke Bremsgriff (20a) unabhängig von dem rechten Bremsgriff (20b) betätigbar ist,wobei zur individuell einstellbaren Verteilung der über die beiden Bremsgriffe (20) eingeleiteten Bremskraft auf die Hinterräder (24) ein Bremskraftverteiler vorgesehen ist, der eine in der Fahrzeuglängsrichtung bewegliche Verteilerplatte (33) besitzt, an der einerseits mit den Bremsgriffen (20a, 20b) verbundene Bowdenzüge (28a, 28 b) fest verbunden sind, während andererseits zu den Bremsen (25a, 25b) führende Bowdenzüge (29a, 29b) in unterschiedlichen Querabständen zueinander und zur Lenksachse befestigbar sind.

Demgemäß ist eine individuell vornehmbare Verteilung der eingeleiteten Bremskraft auf die zu bremsenden Räder vorgesehen und zwar in einfachster Weise durch die individuelle Betätigung der Bremsen jeweils separat über zwei Bremshebel. Dies bewirkt eine zusätzliche, die eingebaute Lenkvorrichtung unterstützende und von dieser unabhängige Lenkursache, die den eigentlichen Lenkvorgang unterstützt. Diese beispielsweise zum Lenken von Kettenfahrzeugen eingesetzte Vorgehensweise bringt den Vorteil mit sich, dass das Fahrzeug noch agiler bewegt werden kann.

Die Radbremsen sind dabei über jeweils einen vorzugsweise am Lenker befindlichen Bremshebel bzw. -griff einzeln ansteuerbar. So steuert der rechte Hebel die Radbremse des rechten Rads und der linke Hebel die Radbremse des linken Rads. Alternativ kann auch eine vergleichbar wirkende Fußbremse eingesetzt werden. Vorteil einer derartigen Ausgestaltung ist, dass auf diese Weise zwei unabhängig voneinander arbeitende Bremssysteme vorliegen, ein rechts wirkendes und ein links wirkendes Bremssystem, was die Sicherheit erhöht.

Ein weiterer Vorteil ist, dass in diesem Fall insbesondere bei Kurvenfahrten das kurveninnere Rad alleine, zumindest aber stärker als das kurvenäußere Rad abgebremst werden kann. Dadurch wird erreicht, dass die Querkräfte auf das vordere Laufrad zumindest stark reduziert werden. Damit ist ein schnelleres und vor allem sichereres Kurvenfahren möglich, da sich die durch die Kurvenfahrt auf das Vorderrad wirkenden Kräfte mit zusätzlichen Kräften, nämlich den aus der mindestens partiellen Hinterradbremsung resultierenden Kräften überlagern. Dabei kann die auf das Vorderrad wirkende Gegenkraft beim Kurvenfahren durch das schwächer gebremste äußere Hinterrad zumindest teilweise kompensiert werden, wodurch die schnellere und sicherere Kurvenfahrt ermöglicht wird. Dadurch dass die von der Bremsvorrichtung bereitgestellte Bremskraft in einem der zu bremsenden Räder einen anderen Wert aufweist, als in dem anderen, wird bei Betätigen des kurveninneren Bremsgriffes durch den Fahrer während einer Kurvenfahrt das kurveninnere Rad, mit einer höheren Bremsleistung beaufschlagt. Hierdurch wird die bei Kurvenfahrt auftretende Querkraft auf das Lenkrad zumindest teilweise kompensiert.

Eine erfindungsgemäß individuell einstellbare Verteilung der Bremswirkung in den einzelnen Rädern der jeweiligen Seite kann beispielsweise durch ein hydraulisch aufgebautes Bremssystem oder durch ein mit Hilfe von Seilzügen aufgebautes (mechanisches) Bremssystem erfolgen.

Durch Betätigung der kurveninneren Bremse wird das Fahrzeug im Extremfall, durch z. B. zu schnelles Fahren in die Kurve, zur Kurvenaußenseite hin rutschen (driften) und nicht über die kurvenäußere Kipplinie des Sportfahrzeuges kippen, was die Sicherheit des Fahrzeugs beträchtlich erhöht. Dadurch, dass die Bremskräfte immer hinter dem Gesamtschwerpunkt wirken, ist eine hohe Fahrstabilität gegeben, da die entsprechenden Kraftvektoren immer auf "Zug" anbeiten, d. h. sie strecken das Fahrzeug.

Eine vorteilhafte Ausgestaltung des Bremssystems sieht einen Bremskraftverteiler vor, der es erlaubt, dass die Bremskraft, die z. B. vom rechten Bremshebel erzeugt wird, auf die z. B. beiden Hinterradbremsen in einem bestimmten Verhältnis aufgeteilt wird, z. B. 2 : 1; d. h. das rechte Rad wird doppelt so stark gebremst wie das linke Rad. Bei Betätigung des linken Bremshebels wird dann doppelt so viel Bremskraft auf das linke Rad übertragen auf das rechte Rad. Durch diese Ausgestaltung wird die Möglichkeit einer Übersteuerung bei schneller Kurvenfahrt verhindert, da die Bremskraft nicht zu 100 % einseitig wirken kann. Selbstverständlich kann in diesem Fall auch der linke und der rechte Bremshebel gleichzeitig bedient werden; dann werden auch die Bremsen gleichmäßig, also symmetrisch wirken.

Im Falle der Ausgestaltung der Erfindung, bei der die Anpassung durch eine individuell einstellbare Verteilung der Bremskraft auf die zu bremsenden Räder während der Fahrt erfolgen kann, besteht die Möglichkeit, dass der Fahrer während der Fahrt selbst die Bremsverhältnisse einstellen kann, angepasst an die jeweiligen Gegebenheiten. Bei einem hydraulisch aufgebauten Bremssystem kann dies beispielsweise durch eine unterschiedliche Beaufschlagung der Bremsen mit Hydraulikflüssigkeit erfolgen.

Dadurch dass die von der Bremsvorrichtung bereitgestellte Bremskraft in einem der zu bremsenden Räder einen anderen Wert aufweist, als in einem anderen, wird außerdem bewirkt, dass das Fahrzeuggewicht reduziert werden kann, da der Einfluss des Fahrzeuggewichts auf die Bodenhaftung, insbesondere des Lenkrades, abnimmt.

Von Vorteil ist, wenn zwischen der Hinterachse und der Rotationsachse von mindestens einem der auf der Hinterachse angebrachten Räder vorzugsweise von beiden Hinterrädern ein Winkel einstellbar ist, wodurch ein individuell einstellbarer Sturz bewirkt wird. Dieser bringt den Vorteil einer zusätzlichen und unabhängigen Bremse. Darüber hinaus kann eine Voreinstellung des Sturzes als Dauerbremse eingestellt werden, so dass immer eine Mindestbremskraft vorhanden ist und damit die Beschleunigung und die Geschwindigkeit reduziert wird (Zwangsbremse). Dies kann sinnvoll sein bei Verleihbetrieben, sowie bei Kindern und reaktionsschwächeren Personen. Eine Möglichkeit diesen Sturz einstellbar zu gestalten wäre, das betreffende Rad mit einem einstellbaren Winkel an die Hinterachse anzufügen z. B. mit einer Vorrichtung ähnlich einem Scharnier. Eine andere Möglichkeit ist, den Achsteil an welchem das jeweilige Rad aufgehängt ist, mit einem vorab festgelegten Winkel an die schwenkbare Hinterachse anzufügen.

Im Falle des vorab festgelegten Winkels ist die Hinterachse um bis zu 90° schwenkbar auszulegen, wodurch durch das Mitschwenken des Sturzes ein zusätzlicher Bremseffekt erzielt wird, der auf die selbe Weise wirkt, wie ein "Schneepflug" einen Skifahrer bremst, und als "Spurbremse" bezeichnet werden kann.

Da die kinetische Energie im Quadrat der Geschwindigkeit wächst, stellt die Spurbremse insbesondere bei höheren Geschwindigkeiten eine überproportionale zusätzliche Sicherheit dar, da bei ihrem Einsatz die Betriebsbremsen wesentlich weniger erwärmt werden. Diese ohne zusätzliches Gewicht vorhandene und wirksame Spurbremse kann daher auch als Sicherheitsreserve bei der Dimensionierung der Bremsen der ersten Bremsanlage eingesetzt werden.

Der Weg, auf welchem die Schwenkung des Rads in Richtung Fahrzeugmittelachse erfolgt, kann neben der beschriebenen Schwenkung der gesamten Achse auch dadurch geschehen, dass die betreffenden Räder unabhängig von der Achse, beispielsweise an der Radaufhängung nach innen oder außen geschwenkt werden (= Scharnierprinzip). Die Einleitung bzw. Umsetzung der Schwenkbewegung kann wie wie beschrieben durch einen Hebel, aber auch per Seilzug, Hydraulik oder elektrisch/elektronisch erfolgen.

Ein zusätzlicher Effekt durch diese Spurbremse ist, dass sie einem Blockieren des Rads entgegenwirkt. Hierdurch ist ein dauerhafterer Kontakt Boden-Rad möglich und damit eine sicherere und effizientere Bremswirkung.

Mit der Erfindung, also dadurch dass das Fahrzeug max 15 kg (vorzugsweise ca. 10 kg) wiegt, wird somit erreicht, dass es der Fahrer wie einen Rodel leicht den Berg hochziehen kann. Beim Bergaufziehen besteht dann die Möglichkeit, dass die durch den Fahrer aufzubringende Zugkraft mittels eines Zugbandes auf das Sportfahrzeug übertragen werden kann. Der Fahrer kann aber beim Bergaufgehen das Fahrzeug ohne größere Anstrengung am z. B. um die Taille befestigten Zugband das relativ leichte Fahrzeug hinter sich mitziehen, sinnvoller Weise mit Walking-Stöcken gehend.

Nachfolgend wird die Erfindung anhand eines Ausführungsbeispiels unter bezug auf die Zeichnung näher erläutert.

Es zeigen:
- Fig. 1:: eine Draufsicht auf das Fahrzeug;
- Fig. 2:: eine Seitenansicht des Fahrzeuges nach Fig. 1;
- Fig. 3:: eine Teilansicht entsprechend Pfeil III aus Fig. 2;
- Fig. 4:: eine Draufsicht auf eine Vorrichtung zur variablen Bremskraftverteilung auf die Hinterradbremsen;
- Fig. 5:: eine Seitenansicht der Vorrichtung nach Fig. 4;
- Fig. 6:: eine Draufsicht auf eine Vorrichtung ähnlich wie in Fig. 4, mit rechteckiger Steueröffnung;
- Fig. 7:: eine schematische Ansicht von hinten auf die gekröpfte Radachse mit geneigten Hinterrädern;
- Fig. 8:: eine Draufsicht auf die Hinterradachse nach Fig. 7, und
- Fig. 9:: eine Draufsicht ähnlich wie in Fig. 8, mit teilweise nach vorne verschwenkter Radachse, in gebremster Stellung.

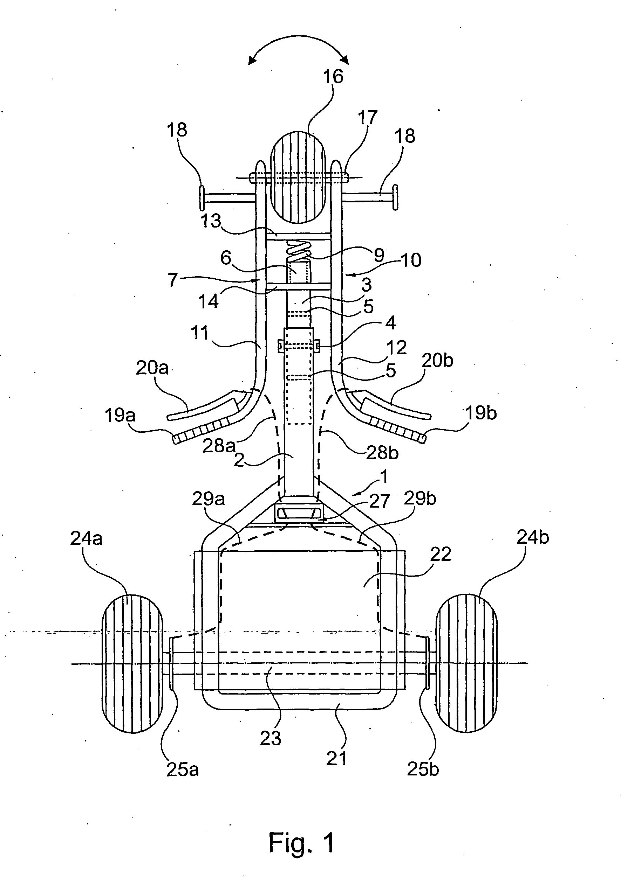

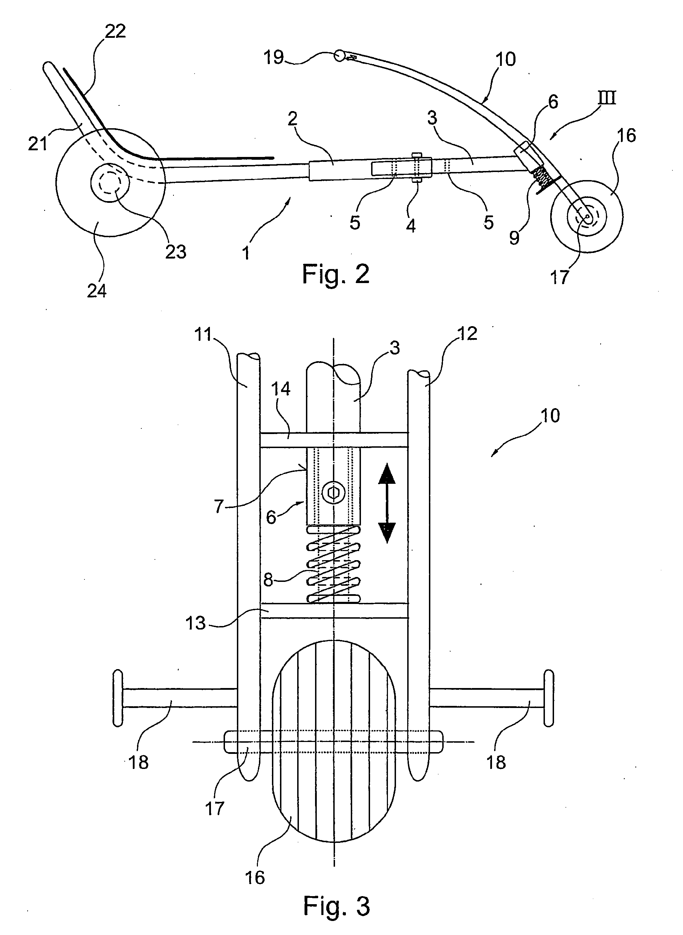

Wie insbesondere aus Fig. 1 bis 3 ersichtlich ist, weist das erfindungsgemäße Fahrzeug einen Fahrzeugrahmen 1, welcher zweiteilig aus einem hinteren Rahmenteil 2 und einem vorderen Rahmenteil 3 besteht. Es kann aus Metall oder Leichtmetall, wie Stahl oder Aluminium oder Magnesium oder aus einem Kunststoff oder einem Verbundwerkstoff, einem Karbonwerkstoff oder einer Kombination dieser Materialien hergestellt sein.

Das vordere Teil 3 ist passgenau in das hintere Teil 2 eingesteckt und mithilfe von mindestens ein durch Bohrungen 5 hindurchgeführte Schraube 4 fixiert. Die längs versetzten parallelen Bohrungen 5 erlauben, dass die Fahrzeuglänge auf verschiedene Körpergrößen eingestellt werden kann. Durch Lösen der Schraube 4 kann das Fahrzeug auch zum Transport, bzw. zur Lagerung in zwei, oder bei mehreren solchen Verbindungen auch in mehr Teile geteilt werden, indem das Teil 3 komplett aus dem Teil 2 herausgezogen wird.

Am vorderen Fahrgestellteil 3 ist ein Drehgelenk 6 vorgesehen, über das eine Lenkgabel 10 angebracht, das aus zwei parallelen Holmen 11, 12, verbunden mit Querstreben 13, 14 besteht. Die Achse des Drehgelenkes 6 ist zur Achse des vorderen Fahrgestellteils 3 um bis zu ca. 30° bis 40° in Fahrtrichtung zum Fahrer hin geneigt. Dadurch kann die Stoßkraft von größeren Fahrbahnunebenheiten, z.B. Querrinnen auf Forstwegen, in etwa achsparallel zum Drehgelenk 6 abgefangen werden.

Das Drehgelenk 6 ist durch eine Hülse 7, einen Gelenkzapfen 8 und eine Druckfeder 9 an einer Querstrebe 13 der Lenkergabel 10 abgestützt, wobei die Druckfeder 9 die Stoßkräfte auf das Fahrgestell überträgt.

Am unteren Ende der Lenkergabel 10, das gleichzeitig die Radgabel darstellt, ist ein Vorderrad 16 über eine Radachse 17 angebracht. Zudem ist dem unteren Ende zugeordnet, seitlich abragend an den Gabelholmen 11, 12 Fußstützen 18 befestigt. Durch Abstützen der Fahrerfüße auf den Fußstützen 18 wird eine zusätzliche Fahrstabilität erreicht.

Das Vorderrad 16 ist vorzugsweise luftbereift, so dass es Stoßkräfte durch Fahrbahnunebenheiten gut absorbieren kann.

Am oberen Ende der Lenkergabel 10 sind Lenkergriffe 19 a und 19 b ausgebildet, an denen jeweils ein Bremsgriff 20 a bzw. 20 b angeordnet ist.

Das hintere Fahrgestellteil 2 besitzt einen Rahmen 21, der einerseits einen Sitz 22 trägt und andererseits eine Achse 23, an deren Enden die Hinterräder 24 a, 24 b, angeordnet sind. Einem jeden Hinterrad 24 a, 24 b, ist eine Bremse 25 a, 25 b, zugeordnet. Dabei ist jeweils eine der Bremsen mit einem der Bremsgriffe 20 a, 20 b, aktiv verbunden, d. h. der linke Bremsgriff 20 a ist mit der linken Bremse 25 a und der rechte Bremsgriff 20 b mit der rechten Bremse 25 b verbunden.

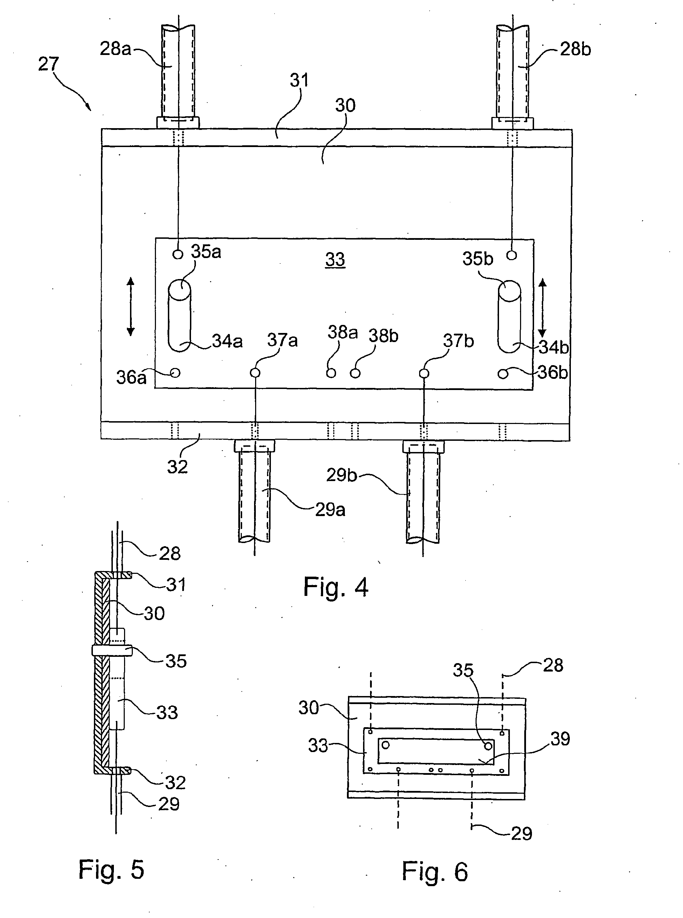

Wie aus Fig. 1 in Verbindung mit Fig. 4 bis 6 ersichtlich ist, ist ein Bremskraftverteiler 27 vorgesehen, der einerseits über Bowdenzüge 28 mit den Bremsgriffen 20 und andererseits über Bowdenzüge 29 mit den Bremsen 25 in Verbindung steht.

Der Bremskraftverteiler 27 besteht dabei aus einer am Rahmen 21 des Fahrgestell-Rahmenteils 3 befestigten Halteplatte 30, die quer zur Längsachse des Fahrzeugs an ihren Kanten je eine Wand 31 bzw. 32 besitzt. Zwischen diesen Wänden 31, 32 befindet sich eine rechteckige Verteilerplatte 33, die zwei in Fahrzeuglängsachse sich erstreckende Langlöcher 34 besitzt. In diese ragt jeweils ein Stift 35 hinein, der in der Halteplatte 30 verankert ist.

Es ist aus Fig. 4 zu erkennen, dass die Mäntel der Bowdenzüge 28 a, 28 b und 29 a, 29 b an den Wänden 31, 32 der Halteplatte 30 befestigt sind, während deren Seelen durch die Wände 31, 32 hindurchgeführt und an der Verteilerplatte 33 befestigt sind. Dabei sind die vorderen Bowdenzüge 28 a, 28 b unverstellbar fixiert, während die hinteren Bowdenzüge 29 a, 29 b in Querrichtung unterschiedliche Positionen einnehmen können, wodurch das Bremskraftverhältnis an den Rädern veränderbar ist.

Der Bremsgriff 20 a ist somit über den Bowdenzug 28 a mit der Verteilerplatte 33 verbunden, gleichzeitig ist der Bowdenzug 29 a mit der linken Radbremse 25 a ververbunden. In gleicher Weise ist der Bremsgriff 20 b über den Bowdenzug 28 b mit der Verteilerplatte 33 verbunden, die zudem über den Bowdenzug 29 b mit der rechten Bremse 25 b verbunden ist. Wird der linke Bremsgriff 20 a betätigt, wird die Bremskraft beispielsweise zu den zuvor mithilfe der Verteilerplatte einstellbaren 2/3 auf das linke Rad 24 a und zu 1/3 auf das rechte Rad 24 b verteilt. Das Bremskraftverhältnis wird durch den Ort der Befestigung der Bowdenzüge 29 in den Befestigungsstellen 36, 37 oder 38, die hier Bohrungen sind, festgelegt.

In Verbindung mit den Stiften 35 und den Langlöchern 34 wirkt die Verteilerplatte 33 derart, dass ein zuvor fest eingestelltes Bremsverhältnis bei jeder Betätigung eines der Bremsgriffe 20 a, 20 b auf die Bremsen 25 a, 25 b übertragen wird.

Durch Verstellen des Bowdenzuges 29 a von der Befestigung 37 a zur Befestigung 36 a und durch Verstellung des Bowdenzuges 29 b von der Befestigung 37 b zur Befestigung 36 b kann die Bremskraftverteilung umgestellt werden. Damit wird mit dem linken Bremsgriff 20 a nur die linke Bremse 25 a und mit dem rechten Bremsgriff 20 b nur die rechten Bremse 25 b angesteuert.

Bei einer Befestigung der Bowdenzüge 29 a / 29 b an den Befestigungsstellen 38 ist eine Bremskraftverteilung von 50 : 50 gegeben. Mit dieser Kombination ist gewährleistet, dass unabhängig davon welcher der beiden Bremsgriffe betätigt wird, die Bremskräfte auf den Rädern 24 a und 24 b immer gleich sind.

Fig. 6 zeigt, wie statt der Führung über Langlöcher eine Seiten-Führung der Verteilerplatte 33 über die Stifte 35, eine rechteckige Öffnung 39 in der Platte verwendbar ist, wobei sich dann die Platte an den Stiften 35 an den beiden achsparallelen Seiten abstützt bzw. durch diese geführt gehalten wird.

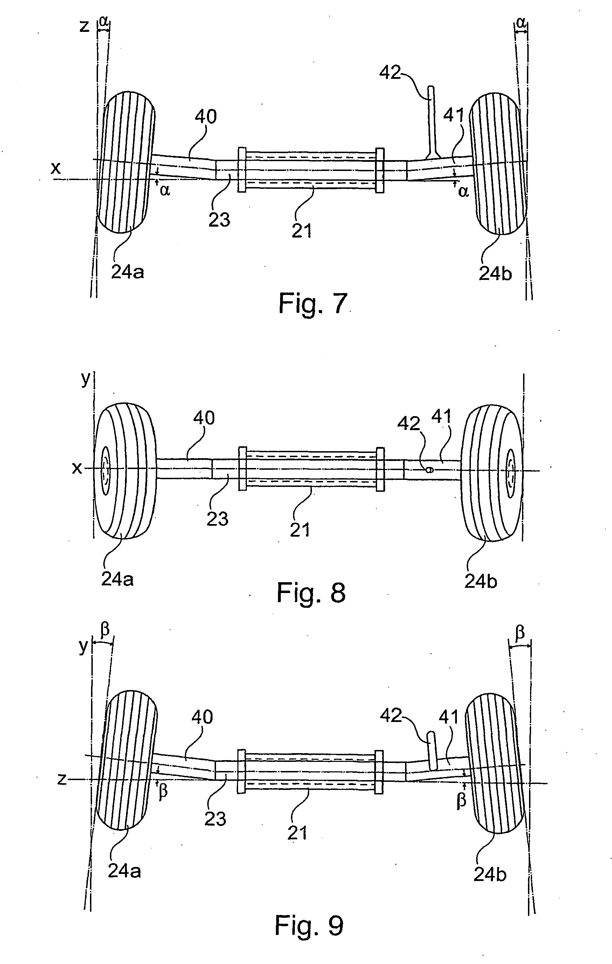

Fig. 7 bis 9 zeigen die Möglichkeiten den Sturz der Hinterräder 24 an der Hinterachse 23 bzw. deren Winkel so einzustellen, dass die Rotationsachse der Hinterräder in Richtung Längsachse des Fahrzeugs geneigt ist. So zeigt Fig. 7 die Ansicht von hinten in ungebremster Stellung und Fig. 8 die entsprechende Draufsicht, bei einem max. Winkel α der Räder 24 zur vertikalen Ebene z. Dabei besitzt die am Rahmen 21 des hinteren Fahrgestellteiles 2 angeordnete Hinterradachse 21 jeweils Achszapfen 40, 41, die ebenfalls um den Winkel α zur Horizontalen x nach oben weisend geneigt sind. Am rechten Achszapfen 41 ist ein senkrecht nach oben ragender Hebel 42 vorsenkrecht nach oben ragender Hebel 42 vorgesehen. Mithilfe dieses Hebels 42 ist die an beiden Enden entsprechend nach oben abgekröpfte Hinterradachse verschwenkbar und zwar um z. B. max. 90° nach vorne und/oder nach hinten. Daher stellt Fig. 7 gleichzeitig auch die Draufsicht nach einer 90°-Schwenkung der Hinterachse 23 dar und somit die Maximal-Bremsstellung.

Fig. 9 zeigt eine Draufsicht wie Fig. 8, jedoch bei einer Bremsstellung von ca. 30° bis 40°-Schwenkung der Hinterachse 23, verursacht durch entsprechendes Verschwenken des Hebels 42 nach vorne. Hierdurch ergibt sich eine Neigung β der Räder 24 zur Vertikalebene und damit gleichzeitig zur Längsachse des Fahrzeugs. Der auf diese Weise eingestellte Winkel, bzw. Winkelanteil bewirkt einen zusätzlichen Bremseffekt, der durch das Schwenken der Hinterachse auf dieselbe Weise wirkt, wie ein "Schneepflug" einen Skifahrer bremst und als "Spurbremse" bezeichnet werden kann. Die Spurbremse arbeitet dergestalt, dass die beiden hinteren Räder 24 a, 24 b in der unbetätigten Stellung einen Sturz nach innen aufweisen, von z. B. 4° -8°.

Bei Betätigen der Spurbremse wird somit die gesamte hintere Achse 23 mit samt der Spur der Räder in- oder entgegen der Fahrtrichtung geschwenkt (Fig. 9, in Fahrtrichtung). Hierdurch schwenken gleichzeitig die an der Achse befindlichen Räder in Richtung Fahrzeugmitte und stellen somit den Bremseffekt bereit. Der Effekt ist bei einer Schwenkung von 90° maximal (vgl. Fig. 7).

Es ergeben sich beim Zuschalten der Spurbremse durch Querkräfte Reibungen zwischen Fahrbahn und Reifen der Räder 24 a, 24 b, wodurch das Fahrzeug abgebremst wird. Der gleiche Effekt entsteht, wenn die Hinterachse 23 entgegen der Fahrtrichtung eine Schwenkung erfährt; hierbei wird die Spur der Räder um einen bestimmten Winkel nach außen wandern, was ebenfalls eine Querkraft auf die Räder 24 a, 24 b bringt und durch die Reibung zwischen Fahrbahn und Räder 24 a, 24 b ist das Fahrzeug unabhängig von den Bremsen 25 a, 25 b ("Hauptbremsen") abbremsbar.

Die Bremsen 25 a, 25 b und die zusätzliche Spurbremse arbeiten unabhängig voneinander, können also sowohl gemeinsam als auch einzeln in Anspruch genommen werden.

Durch diese unabhängige Zusatzbremsmöglichkeit wird außerdem erreicht, dass die in Wärme umgesetzte potentielle Energie nur zum Teil in der Bremse 25 a, 25 b in Wärme umgesetzt wird, da der andere Teil der potentiellen Energie, der über die Spurbremse abgeführt wird, über die Reifen 24 a, 24 b in zusätzliche Reibung bzw. Wärme umgesetzt wird. Diese Wärme wird über die Reifenoberfläche mit Unterstützung des Fahrtwindes an die Umgebung abgeleitet. Dadurch können die Radbremsen 25 a, 25 b geringer dimensioniert und damit auch leichter gebaut werden.

### Bezugszeichenliste

- 1.: Fahrzeugrahmen
- 2.: hinteres Teil
- 3.: vorderes Teil
- 4.: Schraube
- 5.: Bohrungen
- 6.: Drehgelenk
- 7.: Hülse
- 8.: Gelenkzapfen
- 9.: Druckfeder
- 10.: Lenkergabel
- 11.: Holm
- 12.: Holm
- 13.: Querstrebe
- 14.: Querstrebe
- 15.: -
- 16.: Vorderrad
- 17.: Radachse
- 18.: Fußstützen
- 19.: Lenkergriffe
- 20.: Bremsgriffe
- 21.: Rahmen
- 22.: Sitz
- 23.: Hinterachse
- 24.: Hinterräder
- 25.: Bremsen
- 26.: -
- 27.: Bremskraftverteiler
- 28.: Bowdenzüge
- 29.: Bowdenzüge
- 30.: Halteplatte
- 31.: Wand vorne
- 32.: Wand hinten
- 33.: Verteilerplatte
- 34.: Langlöcher
- 35.: Stifte
- 36.: Befestigungsstellen
- 37.: Befestigungsstellen
- 38.: Befestigungsstellen
- 39.: Öffnung
- 40.: Achszapfen
- 41.: Achszapfen
- 42.: Hebel
- α: max. Neigungswinkel
- β: Zwischen-Neigungswinkel

## Patentansprüche

1. Funsportgerät umfassend
ein Fahrgestell (1),
eine drehbare Lenkergabel (10), mit einem linken Lenkergriff (19a) und einem rechten Lenkergriff (19b),
wobei an dem linken Lenkergriff (19a) ein linker Bremsgriff (20a) angeordnet ist und an dem rechten Lenkergriff (19b) ein rechter Bremsgriff (20b) angeordnet ist,
wobei die drehbare Lenkergabel (10) des Weiteren ein Drehgelenk (6) und eine Radachse (17) mit einem Vorderrad (16) umfasst,
eine an der Rückseite des Fahrgestells (1) vorgesehene Hinterachse (23) mit einem linken Hinterrad (24a) und einem rechten Hinterrad (24b),
wobei dem linken Hinterrad (24a) eine linke Bremse (25a) zugeordnet ist und dem rechten Hinterrad (24b) eine rechte Bremse (25b) zugeordnet ist, und
die linke Bremse (25a) über den linken Bremsgriff (20a) betätigbar ist und die rechte Bremse (25b) über den rechten Bremsgriff (20b) betätigbar ist,
wobei der linke Bremsgriff (20a) unabhängig von dem rechten Bremsgriff (20b) betätigbar ist, **dadurch gekennzeichnet, dass** zur individuell einstellbaren Verteilung der über die beiden Bremsgriffe (20) eingeleiteten Bremskraft auf die Hinterräder (24) ein Bremskraftverteiler vorgesehen ist,
der eine in der Fahrzeuglängsrichtung bewegliche Verteilerplatte (33) besitzt, an der einerseits mit den Bremsgriffen (20a, 20b) verbundene Bowdenzüge (28a, 28 b) fest verbunden sind, während andererseits zu den Bremsen (25a, 25b) führende Bowdenzüge (29a, 29b) in unterschiedlichen Querabständen zueinander und zur Lenksachse befestigbar sind.

2. Funsportgerät nach Anspruch 1, **dadurch gekennzeichnet, dass** der Bremskraftverteiler (27) eine Halteplatte (30) aufweist, die am hinteren Fahrgestellteil (2) befestigt ist, wobei eine Verteilerplatte (33) auf dieser in axialer Richtung des Fahrzeugs beweglich aufliegt, geführt durch mindestens einen Stift (35), der in eine Führungsöffnung, z.B. ein Langloch (34) eingreift, wobei Bowdenzüge (28, 29) mit Mantel und Seele vorgesehen sind, wobei die Mäntel der Bowdenzüge (28, 29) am vorderen und hinteren Rand der Halteplatte (30) befestigt sind, während die Seelen der Bowdenzüge an der verteilerplatte (33) angreifen.

3. Funsportgerät nach Anspruch 2, **dadurch gekennzeichnet, dass** die rechteckige Halteplatte (30) an ihren vorderen und hinteren Kanten je eine Wand (31, 32) besitzt, an denen die Mäntel der Bowdenzüge (28, 29) befestigt sind.

4. Funsportgerät nach Anspruch 3, **dadurch gekennzeichnet, dass** zwei Stifte (35) und zwei Langlöcher (34) vorgesehen sind, wobei die Stifte (35) fest in der Halteplatte (30) gehalten sind und in die Langlöcher (34) der Verteilerplatte eingreifen oder umgekehrt.

5. Funsportgerät nach Anspruch 2, **dadurch gekennzeichnet, dass** zwei Stifte (35) und eine Rechtecköffnung vorgesehen sind, wobei die Stifte jeweils an den im Verhältnis zur Mittelachse äußeren Kanten der Rechtecköffnung (39) anliegend vorgesehen sind.

6. Funsportgerät nach Anspruch 1, **dadurch gekennzeichnet, dass** zwischen der Hinterachse (23) und der Rotationsachse der auf der Hinterachse (23) angebrachten Hinterräder (24a, 24b) ein Winkel α (Sturz) vorgesehen ist.

7. Funsportgerät nach Anspruch 6, **dadurch gekennzeichnet, dass** die Hinterachse (23) an ihren Endabschnitten um den Neigungswinkel α um vorzugsweise bis zu 40° geneigt ist, wobei entsprechend schräg nach oben weisende Achszapfen (40, 41) vorhanden sind, welche die Hinterräder (24a, 24b) tragen.

8. Funsportgerät nach Anspruch 5, **dadurch gekennzeichnet, dass** die Hinterachse (23) insgesamt um bis zu 90° in Fahrtrichtung oder Gegenfahrtrichtung schwenkbar ist.

9. Funsportgerät nach Anspruch 7, **dadurch gekennzeichnet, dass** an mindestens einem der äußeren Enden der Hinterachse (23) ein vorzugsweise senkrecht abragender Hebel (42) vorgesehen ist, zum Verschwenken der Hinterradachse von Hand, wobei der Hebel (42) aus einer vertikalen, oberen ungebremsten 0°-Stellung in eine horizontale 90°-Stellung umlegbar ist.

10. Funsportgerät nach Anspruch 9, **dadurch gekennzeichnet, dass** die Hinterachse (23) in vorbestimmten Winkelpositionen arretierbar ist, vorzugsweise über eine mit dem Hebel (42) zusammenwirkende Indexiervorrichtung.

11. Funsportgerät nach Anspruch 10, **dadurch gekennzeichnet, dass** der oberen ungebremsten 0°-Stellung ein einstellbarer Anschlag für den Hebel (42) zugeordnet ist, der die Rückführung des Hebels (42) nur bis in eine Winkelstellung mit vorbestimmter Mindestbremswirkung zulässt.

## Claims

1. Fun sports equipment comprising
a frame (1),
a turnable steering fork (10), with a left handlebar grip (19a) and a right handlebar grip (19b),
wherein a left brake lever (20a) is arranged on the left handlebar grip (19a) and a right brake lever (20b) is arranged on the right handlebar grip (19b),
wherein the turnable steering fork (10) additionally comprises a swivel joint (6) and a wheel axle (17) with a front wheel (16),
a rear axle (23), provided at the rear of the frame (1), with a left rear wheel (24a) and a right rear wheel (24b),
wherein a left brake (25a) is assigned to the left rear wheel (24a) and a right brake (25b) is assigned to the right rear wheel (24b), and
the left brake (25a) can be operated via the left brake lever (20a) and the right brake (25b) can be operated via the right brake lever (20b),
wherein the left brake lever (20a) can be operated independently of the right brake lever (20b), **characterized in that** for the individually adjustable distribution of the braking force initiated via the two brake levers (20) onto the rear wheels (24) a braking-force distributor is provided which has a distributor panel (33) movable in longitudinal direction, to one side of which Bowden cables (28a, 28b) connected to the brake levers (20a, 20b) are rigidly connected while to the other side of which Bowden cables (29a, 29b) leading to the brakes (25a, 25b) can be fixed at different lateral distances relative to each other and to the steering axle.

2. Fun sports equipment according to claim 1, **characterized in that** the braking-force distributor (27) has a retaining panel (30) which is fixed to the rear section of the frame (2), wherein a distributor panel (33) movable in the axial direction of the vehicle rests on this, guided through at least one pin (35) which engages in a guide aperture, e.g. an oblong hole (34), wherein Bowden cables (28, 29) are provided with a jacket and a core, wherein the jackets of the Bowden cables (28, 29) are fixed to the front and rear edges of the retaining panel (30), while the cores of the Bowden cables engage at the distributor panel (33).

3. Fun sports equipment according to claim 2, **characterized in that** the rectangular retaining panel (30) at each of its front and rear edges has a wall (31, 32), to which the jackets of the Bowden cables (28, 29) are fixed.

4. Fun sports equipment according to claim 3, **characterized in that** two pins (35) and two oblong holes (34) are provided, wherein the pins (35) are held fast in the retaining panel (30) and engage in the oblong holes (34) of the distributor panel or vice versa.

5. Fun sports equipment according to claim 2, **characterized in that** two pins (35) and a rectangular opening are provided, wherein each of the pins is provided abutting the outer edges of the rectangular opening (39) relative to the central axis.

6. Fun sports equipment according to claim 1, **characterized in that** an angle _ (camber) between the rear axle (23) and the axis of rotation of the rear wheels (24a, 24b) attached to the rear axle (23) is provided.

7. Fun sports equipment according to claim 6, **characterized in that** at its end sections the rear axle (23) is tilted around the tilt angle _ by preferably up to 40°, wherein there are pivots (40, 41) pointing upwards at a corresponding angle which carry the rear wheels (24a, 24b).

8. Fun sports equipment according to claim 5, **characterized in that** the rear axle (23) can be pivoted by up to 90° overall in the direction of travel or against the direction of travel.

9. Fun sports equipment according to claim 7, **characterized in that** at at least one of the outer ends of the rear axle (23) a preferably vertically projecting lever (42) is provided for swivelling the rear wheel axle by hand, wherein the lever (42) can be moved from a vertical, upper unbraked 0° position into a horizontal 90° position.

10. Fun sports equipment according to claim 9, **characterized in that** the rear axle (23) can be locked in predetermined angle positions, preferably via an indexing device cooperating with the lever (42).

11. Fun sports equipment according to claim 10, **characterized in that** an adjustable stop for the lever (42) which allows the lever (42) to be returned only into an angle position with a predetermined minimum braking effect is assigned to the upper unbraked 0° position.

## Revendications

1. Appareil de sport et de détente comprenant :
un châssis (1) ;
une fourche de guidon (10) pouvant tourner, avec une poignée de guidon (19a) gauche et une poignée de guidon (19b) droite ;
une poignée de frein (20a) gauche étant disposée au niveau de la poignée de guidon (19a) gauche et une poignée de frein (20b) droite étant disposée au niveau de la poignée de guidon (19b) droite ;
la fourche de guidon (10) pouvant tourner comprenant également une rotule pivotante (6) et un essieu de roue (17) doté d'une roue avant (16) ;
un essieu arrière (23) prévu au niveau du côté arrière du châssis (1) avec une roue arrière (24a) gauche et une roue arrière (24b) droite ;
un frein (25a) gauche étant associé à la roue arrière (24a) gauche et un frein (25b) droit étant associé à la roue arrière (24b) droite ; et
le frein (25a) gauche pouvant être actionné par le biais de la poignée de frein (20a) gauche et le frein (25b) droit pouvant être actionné par le biais de la poignée de frein (20b) droite ;
la poignée de frein (20a) gauche pouvant être actionnée indépendamment de la poignée de frein (20b) droite ;
**caractérisé en ce que** :
un répartiteur de force de freinage est prévu sur les roues arrière (24) pour la répartition réglable individuellement de la force de freinage amenée par les deux poignées de frein (20), ledit répartiteur possédant une plaque de répartiteur (33) mobile dans la direction longitudinale du véhicule avec laquelle sont reliés fixement d'une part des câbles Bowden (28a, 28b) reliés aux poignées de frein (20a, 20b) tandis que des câbles Bowden (29a, 29b) conduisant aux freins (25a, 25b) peuvent être fixés d'autre part à différentes distances transversales les uns par rapport aux autres et par rapport à l'essieu de direction.

2. Appareil de sport et de détente selon la revendication 1, **caractérisé en ce que** le répartiteur de force de freinage (27) comporte une plaque de support (30) fixée au niveau de la partie de châssis (2) arrière, une plaque de répartiteur (33) reposant de façon mobile sur celle-ci dans la direction axiale du véhicule, guidée par au moins une tige (35) s'engrenant dans une ouverture de guidage, par exemple un trou oblong (34), des câbles Bowden (28, 29) étant pourvus d'une gaine et d'une âme, les gaines des câbles Bowden (28, 29) étant fixées au niveau du bord avant et arrière de la plaque de support (30) tandis que les âmes des câbles Bowden s'engrènent au niveau de la plaque de répartiteur (33).

3. Appareil de sport et de détente selon la revendication 2, **caractérisé en ce que** la plaque de support (30) rectangulaire possède respectivement une paroi (31, 32) au niveau de ses arêtes avant et arrière, les gaines des câbles Bowden (28, 29) étant fixées au niveau de ladite paroi.

4. Appareil de sport et de détente selon la revendication 3, **caractérisé en ce que** deux tiges (35) et deux trous oblongs (34) sont prévus, les tiges (35) étant maintenues fixement dans la plaque de support (30) et s'engrenant dans les trous oblongs (34) de la plaque de répartiteur ou inversement.

5. Appareil de sport et de détente selon la revendication 2, **caractérisé en ce que** deux tiges (35) et une ouverture rectangulaire sont prévues, les tiges étant respectivement prévues au niveau des arêtes de l'ouverture rectangulaire (39) placées à extérieur par rapport à l'axe central.

6. Appareil de sport et de détente selon la revendication 1, **caractérisé en ce qu'**un angle _ (Sturz) est prévu entre l'essieu arrière (23) et l'axe de rotation des roues arrière (24a, 24b) disposées sur l'essieu arrière (23).

7. Appareil de sport et de détente selon la revendication 6, **caractérisé en ce que** l'essieu arrière (23) est incliné au niveau de ses sections d'extrémité de l'angle d'inclinaison s'étendant de préférence jusqu'à 40°, des tenons d'essieu (40, 41) orientés vers le haut dans le plan oblique étant présents de façon correspondante, lesdits tenons supportant les roues arrière (24a, 24b).

8. Appareil de sport et de détente selon la revendication 5, **caractérisé en ce que** l'essieu arrière (23) peut pivoter au total de 90° maximum dans la direction de conduite ou dans la direction contraire à la direction de conduite.

9. Appareil de sport et de détente selon la revendication 7, **caractérisé en ce qu'**un levier (42) saillant de préférence verticalement vers le bas est prévu au niveau d'au moins une des extrémités extérieures de l'essieu arrière (23), pour faire pivoter l'essieu de roue arrière à la main, le levier (42) pouvant être placé d'une position supérieure verticale sans freinage de 0° dans une position horizontale de 90°.

10. Appareil de sport et de détente selon la revendication 9, **caractérisé en ce que** l'essieu arrière (23) peut être bloqué dans des positions angulaires prédéfinies, de préférence par le biais d'un dispositif d'indexation interagissant avec le levier (42).

11. Appareil de sport et de détente selon la revendication 10, **caractérisé en ce qu'**une butée réglable est associée à la position supérieure de 0° sans freinage, ladite butée ne permettant de ramener le levier (42) en arrière que dans une certaine position angulaire avec un effet de freinage minimal prédéfini.
